(19) **Europäisches Patentamt / European Patent Office / Office européen des brevets**

(11) **EP 2 551 643 B1**

(12) **EUROPEAN PATENT SPECIFICATION**

(45) Date of publication and mention
of the grant of the patent:
**24.04.2019 Bulletin 2019/17**

(51) Int Cl.:
**G01D 5/24** *(2006.01)*        **G01F 23/26** *(2006.01)*

(21) Application number: **12178231.2**

(22) Date of filing: **27.07.2012**

(54) **Capacitive measuring circuit insensitive to high-frequency interference**

Für hochfrequente Störungen unempfindliche kapazitive Messschaltung

Circuit de mesure capacitif insensible aux interférences à haute fréquence

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.07.2011 NL 2007186**

(43) Date of publication of application:
**30.01.2013 Bulletin 2013/05**

(73) Proprietor: **Fluid Well Instruments B.V.
5111 XC Baarle-Nassau (NL)**

(72) Inventor: **Slezak, Marian Jozef Walter
4891 CW Rijsbergen (NL)**

(74) Representative: **Patentwerk B.V.
P.O. Box 1514
5200 BN 's-Hertogenbosch (NL)**

(56) References cited:
EP-A1- 1 426 772        WO-A2-96/24823
GB-A- 2 279 756        JP-A- 2011 112 595

## Description

Capacitive measuring circuits for measuring the content of a vessel are generally known. In such measuring circuits the two measuring electrodes are placed in the vessel and the capacitance between the two measuring electrodes, which do after all together form a capacitor, is measured. Assuming that the measuring electrodes are placed fixedly in the vessel, the capacitance of this capacitor depends on the dielectric constant of the materials in the volume in which the electrical field between the measuring electrodes extends. Many substances have a dielectric constant differing from the dielectric constant of air, so that the capacitance of the capacitor is a good measure of the extent of filling of the vessel. When two substances are present in the vessel, the volume ratio of these two substances can be measured by means of measuring the capacitance. More options are created when more than two measuring electrodes are applied and in the case of use in channels.

Accordingly WO-A-96/24823 discloses a measuring circuit for measuring the capacitance of a measuring capacitor, the measuring circuit comprising an oscillator including the measuring capacitor which comprises a first and a second measuring electrode, wherein the measuring circuit further comprises a charging resistor coupled to the measuring capacitor, wherein the frequency of the output signal of the measuring circuit is a measure of the capacitance of the capacitor.

When these measurements are applied within electrically conductive vessels, these measurements are fairly insensitive to high-frequency interference from outside. More and more use is being made in recent times of vessels manufactured from non-electrically conductive material, whereby high-frequency interference signals in particular can occur, making performing of the measurements much more difficult. Apart from such measurement situations, it also occurs that the cables necessary for connecting the diverse components cannot be shielded, or hardly so, so that irrespective of the measurement configuration the cables themselves pick up interference and function as source of interference.

Because mainly high-frequency signals are involved and the measurements generally have a low-frequency progression, it is in principle attractive to use frequency filters to separate the high-frequency interference signals from the measurement signal. Accordingly JP-A-2011 112595 discloses a measuring circuit for measuring the capacitance of a measuring capacitor, the measuring circuit comprising an oscillator including the measuring capacitor which comprises a first and a second measuring electrode, wherein the measuring circuit further comprises a charging resistor coupled to the measuring capacitor, wherein the frequency of the output signal of the measuring circuit is a measure of the capacitance of the capacitor, the oscillator further comprising a buffer amplifier, in which the junction between the charging resistor and the measuring capacitor is connected to the buffer amplifier.

Other art is known from GB2279756.

The measurement takes place however at high to very high impedances. What are involved here are measuring signals which vary only slowly and capacitors with very small capacitances. The use of filters therefore results immediately in interference in the measurements. It is of course possible to apply low-pass filters, but the capacitors necessary for such a filter for the purpose of a useful dimensioning have capacitances which are many times greater than those of the actual measuring capacitor, so that the presence of a filter and the associated high capacitance makes variations in the - small - capacitance of the measuring capacitor hardly detectable in the resulting output signal, let alone that they can serve as basis for measurements. The object of the invention is to provide such a measuring circuit which is considerably less sensitive to high-frequency interference.

This object is achieved with a measuring circuit of the kind referred to above in which the buffer amplifier is provided with a low-pass filter, comprising an RC-filter element and in which the resistance value of the resistor of the RC filter element is at least an order of magnitude smaller than the resistance value of the charging resistor.

According to the first preferred embodiment, the buffer amplifier comprises an operational amplifier provided with feedback. Operational amplifiers are amplifiers which are usually available as integrated circuit and which, in addition to having a high amplification factor, have high input impedances so that they usually have excellent properties for the application anticipated here, wherein the feedback brings about the desired change in the impedance level.

Yet another embodiment provides the feature that the operational amplifier is connected so as to function as a low-pass filter. Buffer amplifiers are also available with an input capacitance and input resistance such that the buffer amplifier already functions in itself as a low-pass filter.

Although other configurations are not precluded, it is recommended that the low-pass filter comprises an RC element. A simple filter configuration is thus created with properties sufficient for this application.

Use is preferably made of a measuring circuit provided with an oscillator, wherein the measuring capacitor and the charging resistor form the components defining the frequency of the oscillator. Such measuring circuits do after all have a simple structure.

According to a corresponding variant, the RC time constant of the RC filter element is at least an order of magnitude smaller than the RC time constant of the components defining the frequency of the oscillator.

As alternative to the above elucidated measuring circuits provided with an RC oscillator, the present embodiment provides a measuring circuit provided with a triangular voltage generator, the output connection of which is coupled to the first measuring electrode, and with a comparator circuit, the input connection of which is connected to the second measuring electrode, wherein the buffer amplifier is connected between the second measuring electrode and the comparator circuit. Such circuits likewise have a simple structure and can be attractive in some situations.

The second measuring electrode is preferably connected by means of a low-pass filter to the input connection of the buffer amplifier.

It is also attractive in this configuration for the buffer amplifier to comprise a low-pass filter.

In order to be as effective as possible, the RC time constant of the at least one low-pass filter is at least an order of magnitude smaller than the RC time constant of the components defining the frequency of the oscillator.

The invention also relates to a measuring device comprising a measuring circuit according to any of the foregoing claims, wherein the measuring device is adapted to measure a property of a fluid present in a vessel or a channel, and the first and the second measuring electrode are placed such that the electric field between the first and the second measuring electrode extends over the content of the vessel or the channel.

The invention further relates to a method for measuring the capacitance of a measuring capacitor provided with a first and a second measuring electrode, the measuring capacitor being incorporated into an oscillator, further comprising a charging resistor, wherein the frequency of the output signal of the oscillator is a measure of the capacitance of the measuring capacitor, wherein the signal prevailing at the junction between the measuring capacitor and the charging resistor is fed to an input of a buffer amplifier wherein the buffer amplifier is provided with a low-pass filter, comprising an RC-element and wherein the resistance value of the resistor of the RC filter element is at least an order of magnitude smaller than the resistance value of the charging resistor.

The present invention will be elucidated hereinbelow with reference to the accompanying drawings, in which:

> Figure 1 shows a diagram of a prior art capacitive measuring circuit;
> Figure 2 shows a diagram of another prior art measuring circuit;
> Figure 3 shows a diagram of a first embodiment of the invention; and
> Figure 4 shows a diagram of a second embodiment.

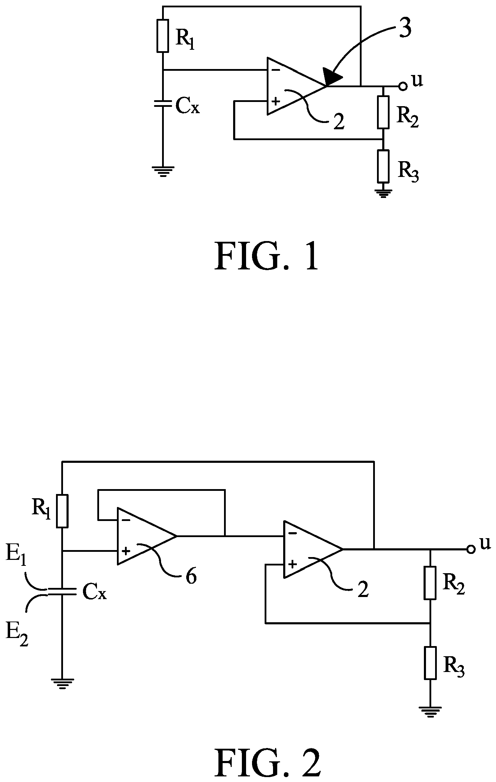

Figure 1 shows a prior art capacitive measuring circuit 1. The measuring circuit comprises an operational amplifier 2 which operates as comparator and the output connection 3 of which is connected to the output connection 4 of measuring circuit 1. Output connection 3 is connected via two resistors $R_2$ and $R_3$ to earth. These resistors $R_2$ and $R_3$ together form a voltage divider and the connecting point of these two resistors $R_2$ and $R_3$ is con-

nected to the non-inverting input connection of the operational amplifier 2 operating as comparator. Output connection 3 is also connected via a charging resistor $R_1$ to the first electrode of the measuring capacitor $C_x$. This capacitor $C_x$ forms of the capacitor of which the capacitance is measured for the purpose of measuring the degree of filling of a vessel or other quantity on which the capacitance of capacitor $C_x$ depends. The second electrode of measuring capacitor $C_x$ is connected to earth. The first electrode of measuring capacitor $C_x$ is also connected to the inverting input connection of the operational amplifier 2 functioning as comparator.

Charging resistor $R_1$ and measuring capacitor $C_x$ together form an RC circuit with a resonance frequency. Now that this is incorporated in the feedback loop of the operational amplifier, the whole circuit forms an oscillator, the frequency of which is defined by the formula:

$$F = 1/R_1.C_x.$$

It is noted that the value of $C_x$ is small, usually in the order of magnitude of between 0.1 pF and 10 pF. It follows herefrom that, for a properly measurable frequency in the order of magnitude of 100 kHz, the charging resistor $R_1$ must have a value of about 100 k$\Sigma$ to 100 M$\Sigma$.

In another prior art circuit, the diagram of which is shown in figure 2, an operational amplifier 6 is added in order to cope with high-frequency interference. This operational amplifier 6 functions as buffer amplifier. The output connection of the operational amplifier is connected to the inverting input connection of the operational amplifier 2 of measuring circuit 1 functioning as comparator. The inverting input connection of operational amplifier 6 is connected to the output connection thereof so that a negative feedback is created. The non-inverting input connection of operational amplifier 6 is connected to the connecting point between measuring capacitor $C_x$ and charging resistor $R_1$. The main function of operational amplifier 6, being amplification, does not contribute per se toward suppressing high-frequency interference, although the amplification does cause a change in the impedance level, whereby a filter can be added more easily. The inherent impedances of operational amplifier 6, which are in fact parasitic, do however usually form a filter here which in many cases already produces good results in terms of suppressing interference signals.

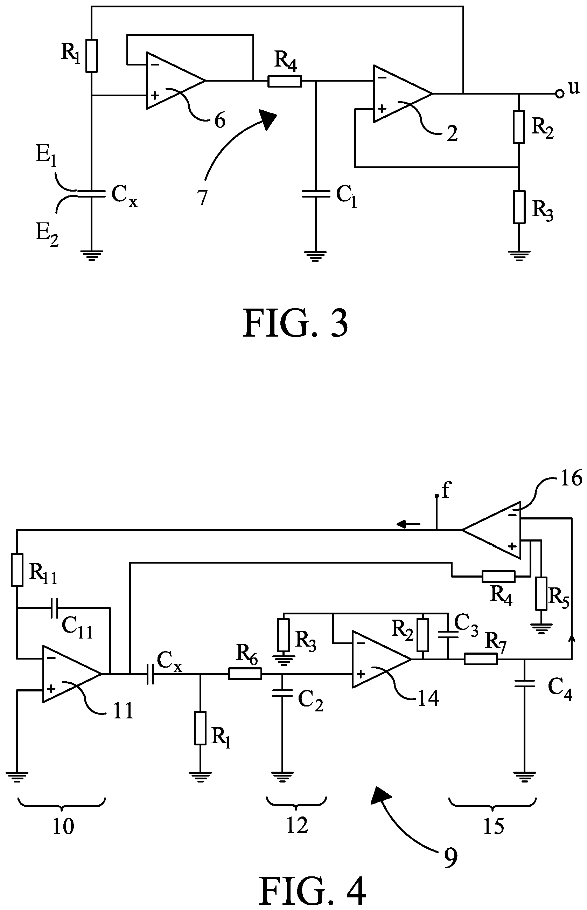

The circuit shown in figure 3, which represents a first embodiment of the invention, differs from the embodiment shown in figure 2 only in the presence of a filter 7 which is formed by a series resistor $R_4$ and a capacitor $C_1$ leading to earth. Filter 7 here supplements the inherent input impedances of operational amplifier 6. It is possible with a suitable choice of the values of the components to modify the turnover frequency of the filter for the purpose of optimizing the interference-absorbing function of the filter.

Finally, figure 4 shows an embodiment of the invention wherein another type of oscillator is applied. This is a circuit adapted to charge the measuring capacitor with a sawtooth voltage. Created as a result at another electrode of the measuring capacitor is a block-like signal which is fed to a comparator.

The circuit more particularly comprises a sawtooth generator 10 provided with an operational amplifier 11, a capacitor $C_{11}$ and a resistor $R_{11}$. The non-inverting input connection of operational amplifier 11 is connected here to earth and the inverting input connection thereof is connected by a parallel circuit of resistor $R_{11}$ and capacitor $C_{11}$ to the output connection of operational amplifier 11. A sawtooth voltage is thus created on the output connection of operational amplifier 11.

The output connection of operational amplifier 11 is connected to a first electrode of measuring capacitor $C_x$, the second electrode of which is connected to a resistor $R_1$ leading to earth and functioning as current-voltage converter. The discharge current of measuring capacitor $C_x$ is hereby converted to a voltage which can be utilized more easily by the subsequent parts of the circuit.

The connecting point between resistor $R_1$ and measuring capacitor $C_x$ is also connected to a first low-pass filter 12 comprising a resistor $R_6$ and a capacitor $C_2$.

The output connection of the first low-pass filter 12 is connected to the non-inverting input connection of an operational amplifier 14 functioning as buffer amplifier. The inverting input connection of operational amplifier 14 is connected to a feedback circuit which functions as second low-pass filter and which is provided with a parallel circuit of a resistor $R_2$ and a capacitor $C_3$. The inverting input connection of the operational amplifier is likewise connected to earth via a resistor $R_3$.

The output connection of operational amplifier 14 is connected to a third low-pass filter 15 formed by a resistor $R_7$ and a capacitor $C_4$ leading to earth. The output connection of the third low-pass filter 15 is connected to the inverting input connection of an operational amplifier 16 which functions as comparator and the non-inverting input connection of which is connected via a resistor $R_5$ to earth and connected via a resistor $R_4$ to the output connection of the sawtooth generator. The output signal, the frequency of which is a measure of the capacitance of capacitor $C_x$, comes available at the output connection of the operational amplifier 16 functioning as comparator. The output signal of operational amplifier 16 is also fed as trigger signal to sawtooth generator 10.

It is noted in the case of this circuit that the operational amplifier 16 functioning as comparator is, as is usual, not provided with feedback. It will be apparent that at a small value of $C_x$ the charging and discharging takes place more quickly than at a greater value of $C_x$, so that the frequency of the signals circulating in the circuit is a measure of the capacitance of capacitor $C_x$.

It will be apparent that the combination of a low-pass filter and an amplifier with which the surprising effect of the invention is obtained can also be applied with oscillators of other configuration.

**Claims**

1. Measuring circuit (1) for measuring the capacitance of a measuring capacitor ($C_x$), the measuring circuit (1) comprising an oscillator including the measuring capacitor (Cx) which comprises a first and a second measuring electrode , wherein the measuring circuit (1) further comprises a charging resistor ($R_1$) coupled to the measuring capacitor , wherein the frequency of the output signal of the measuring circuit (1) is a measure of the capacitance of the capacitor (Cx), the oscillator further comprising a buffer amplifier (2), in which the junction between the charging resistor (R1) and the measuring capacitor (Cx) is connected to the buffer amplifier (2), **characterized in that** the buffer amplifier is provided with a low-pass filter , comprising an RC-filter element ($R_4$, $C_1$) and that the resistance value of the resistor ($R_4$) of the RC filter element is at least an order of magnitude smaller than the resistance value of the charging resistor ($R_1$).

2. Measuring circuit as claimed in claim 1, **characterized in that** the buffer amplifier (2) comprises an operational amplifier provided with a feedback circuit ($R_2$, $R_3$).

3. Measuring circuit as claimed in claim 2, **characterized in that** the operational amplifier (2) is connected so as to function as a low-pass filter.

4. Measuring circuit as claimed in any of the foregoing claims, **characterized in that** the second measuring electrode ($E_2$) is connected by the RC filter element ($R_4$, $C_1$) to the input connection of the buffer amplifier (2).

5. Measuring circuit as claimed in claim 4, **characterized in that** the oscillator is provided with an operational amplifier (6).

6. Measuring circuit as claimed in claim 4 or 5, **characterized in that** the RC time constant of the RC filter element ($R_4$, $C_1$) is at least an order of magnitude smaller than the RC time constant of the components ($R_1$, $C_x$) defining the frequency of the oscillator.

7. Measuring circuit as claimed in any of the claims 1-3, **characterized in that** the measuring circuit is provided with a triangular voltage generator (10), the output connection of which is coupled to the first electrode (E1) of the measuring capacitor ($C_x$), and with a comparator circuit (16), the input connection of which is connected to the second electrode (E2) of

the measuring capacitor ($C_x$), wherein the buffer amplifier (14) is connected between the second electrode (E2) of the measuring capacitor and the comparator circuit (16) .

**8.** Measuring circuit as claimed in claim 7, **characterized in that** the output connection of the buffer amplifier (14) is connected by a low-pass filter (15) to the input connection of the comparator circuit (16).

**9.** Measuring circuit as claimed in claim 8, **characterized in that** the RC time constant of the at least one low-pass filter (15) is at least an order of magnitude smaller than the RC time constant of the components ($C_x$, $R_1$) defining the frequency of the oscillator.

**10.** Measuring device comprising a measuring circuit as claimed in any of the foregoing claims, **characterized in that** the measuring device is adapted to measure a property of a fluid present in a vessel or a channel, and that the first and the second measuring electrode are placed such that the electric field between the first and the second measuring electrode extends over the content of the vessel or the channel.

**11.** Method for measuring the capacitance of a measuring capacitor ($C_x$) provided with a first and a second measuring electrode, the measuring capacitor being incorporated into an oscillator, further comprising a charging resistor ($R_1$), wherein the frequency of the output signal of the oscillator is a measure of the capacitance of the measuring capacitor ($C_x$), wherein the signal prevailing at the junction between the measuring capacitor ($C_x$), and the charging resistor ($R_1$) is fed to an input of a buffer amplifier (2) **characterized in that** the buffer amplifier (2) is provided with a low-pass filter, comprising an RC-element ($C_1$, $R_4$) and that the resistance value of the resistor ($R_4$) of the RC filter element is at least an order of magnitude smaller than the resistance value of the charging resistor ($R_1$).

**Patentansprüche**

**1.** Messschaltung (1) zum Messen der Kapazität eines Messkondensators ($C_x$), wobei die Messschaltung (1) einen Oszillator einschließlich des Messkondensators (Cx) umfasst, der eine erste und eine zweite Messelektrode umfasst, wobei die Messschaltung (1) ferner einen Ladewiderstand ($R_1$) umfasst, der mit dem Messkondensator gekoppelt ist, wobei die Frequenz des Ausgangssignals der Messschaltung (1) ein Maß der Kapazität des Kondensators (Cx) ist, der Oszillator ferner einen Pufferverstärker (2) umfasst, in welchem die Verbindung zwischen dem Ladewiderstand (R1) und dem Messkondensator (Cx) mit dem Pufferverstärker (2) verbunden ist, **dadurch gekennzeichnet, dass** der Pufferverstärker mit einem Tiefpassfilter versehen ist, das ein RC-Filterelement ($R_4$, $C_1$) umfasst, und dass der Widerstandswert des Widerstands ($R_4$) des RC-Filterelements mindestens eine Größenordnung kleiner als der Widerstandswert des Ladewiderstands ($R_1$) ist.

**2.** Messschaltung nach Anspruch 1, **dadurch gekennzeichnet, dass** der Pufferverstärker (2) einen Betriebsverstärker umfasst, der mit einem Rückkopplungsverstärker ($R_2$, $R_3$) versehen ist.

**3.** Messschaltung nach Anspruch 2, **dadurch gekennzeichnet, dass** der Betriebsverstärker (2) derart verbunden ist, um als ein Tiefpassfilter zu fungieren.

**4.** Messschaltung nach einem der vorhergehenden Ansprüche, **dadurch gekennzeichnet, dass** die zweite Messelektrode ($E_2$) mittels des RC-Filterelements ($R_4$, $C_1$) mit der Eingangsverbindung des Pufferverstärkers (2) verbunden ist.

**5.** Messschaltung nach Anspruch 4, **dadurch gekennzeichnet, dass** der Oszillator mit einem Betriebsverstärker (6) versehen ist.

**6.** Messschaltung nach Anspruch 4 oder 5, **dadurch gekennzeichnet, dass** die RC-Zeitkonstante des RC-Filterelements ($R_4$, $C_1$) mindestens eine Größenordnung kleiner als die RC-Zeitkonstante der Komponenten ($R_1$, $C_x$) ist, die die Frequenz des Oszillators definiert.

**7.** Messschaltung nach einem der Ansprüche 1 - 3, **dadurch gekennzeichnet, dass** die Messschaltung mit einem Dreiecksspannungsgenerator (10), dessen Ausgangsverbindung mit der ersten Elektrode (E1) des Messkondensators ($C_x$) gekoppelt ist, und mit einer Komparatorschaltung (16) versehen ist, deren Eingangsverbindung mit der zweiten Elektrode (E2) des Messkondensators ($C_x$) verbunden ist, wobei der Pufferverstärker (14) zwischen der zweiten Elektrode (E2) des Messkondensators und der Komparatorschaltung (16) verbunden ist.

**8.** Messschaltung nach Anspruch 7, **dadurch gekennzeichnet, dass** die Ausgangsverbindung des Pufferverstärkers (14) mittels eines Tiefpassfilters (15) mit der Eingangsverbindung der Komparatorschaltung (16) verbunden ist.

**9.** Messschaltung nach Anspruch 8, **dadurch gekennzeichnet, dass** die RC-Zeitkonstante des mindestens einen Tiefpassfilters (15) mindestens eine Größenordnung kleiner als die RC-Zeitkonstante der Komponenten ($C_x$, $R_1$) ist, die die Frequenz des Oszillators definiert.

**10.** Messvorrichtung, umfassend eine Messschaltung nach einem der vorhergehenden Ansprüche, **dadurch gekennzeichnet, dass** die Messvorrichtung ausgelegt ist, um eine Eigenschaft eines in einem Gefäß oder einem Kanal vorhandenen Fluids zu messen, und dass die erste und die zweite Messelektrode derart angeordnet sind, dass das elektrische Feld zwischen der ersten und der zweiten Messelektrode sich über den Inhalt des Gefäßes oder des Kanals erstreckt.

**11.** Verfahren zum Messen der Kapazität eines Messkondensators ($C_x$), der mit einer ersten und einer zweiten Messelektrode versehen ist, wobei der Messkondensators in einem Oszillator aufgenommen ist, der ferner einen Ladewiderstand ($R_1$) umfasst, wobei die Frequenz des Ausgangssignals des Oszillators ein Maß der Kapazität des Messkondensators ($C_x$) ist, wobei das Signal, das an der Verbindung zwischen dem Messkondensator ($C_x$) und dem Ladewiderstand ($R_1$) vorherrscht, einem Eingang eines Pufferverstärkers (2) zugeführt wird, **dadurch gekennzeichnet, dass** der Pufferverstärker (2) mit einem Tiefpassfilter versehen ist, das ein RC-Element ($C_1$, $R_4$) umfasst, und dass der Widerstandswert des Widerstands ($R_4$) des RC-Filterelements mindestens eine Größenordnung kleiner als der Widerstandswert des Ladewiderstands ($R_1$) ist.

**Revendications**

**1.** Circuit de mesure (1) destiné à mesurer la capacité d'un condensateur de mesure ($C_x$), le circuit de mesure (1) comprenant un oscillateur comportant le condensateur de mesure ($C_x$) qui comprend une première et une deuxième électrode de mesure, le circuit de mesure (1) comprenant en outre une résistance de charge ($R_1$) couplée au condensateur de mesure, la fréquence du signal de sortie du circuit de mesure (1) étant une mesure de la capacité du condensateur ($C_x$), l'oscillateur comprenant en outre un amplificateur séparateur (2), la jonction entre la résistance de charge ($R_1$) et le condensateur de mesure ($C_x$) étant branchée à l'amplificateur séparateur (2), **caractérisé en ce que** l'amplificateur séparateur est pourvu d'un filtre passe-bas comprenant un élément filtrant RC ($R_4$, $C_1$) et **en ce que** la valeur de résistance de la résistance ($R_4$) de l'élément filtrant RC est inférieure d'au moins un ordre de grandeur à la valeur de résistance de la résistance de charge ($R_1$).

**2.** Circuit de mesure selon la revendication 1, **caractérisé en ce que** l'amplificateur séparateur (2) comprend un amplificateur opérationnel pourvu d'un circuit de rétroaction ($R_2$, $R_3$).

**3.** Circuit de mesure selon la revendication 2, **caractérisé en ce que** l'amplificateur opérationnel (2) est branché de manière à fonctionner comme un filtre passe-bas.

**4.** Circuit de mesure selon l'une quelconque des revendications précédentes, **caractérisé en ce que** la deuxième électrode de mesure ($E_2$) est branchée par l'élément filtrant RC ($R_4$, $C_1$) à la connexion d'entrée de l'amplificateur séparateur (2).

**5.** Circuit de mesure selon la revendication 4, **caractérisé en ce que** l'oscillateur est pourvu d'un amplificateur opérationnel (6).

**6.** Circuit de mesure selon la revendication 4 ou 5, **caractérisé en ce que** la constante de temps RC de l'élément filtrant RC ($R_4$, $C_1$) est inférieure d'au moins un ordre de grandeur à la constante de temps RC des composants ($R_1$, $C_x$) définissant la fréquence de l'oscillateur.

**7.** Circuit de mesure selon l'une quelconque des revendications 1 à 3, **caractérisé en ce que** le circuit de mesure est pourvu d'un générateur de tension triangulaire (10), dont la connexion de sortie est couplée à la première électrode (E1) du condensateur de mesure ($C_x$), et d'un circuit comparateur (16), dont la connexion d'entrée est branchée à la deuxième électrode (E2) du condensateur de mesure ($C_x$), l'amplificateur séparateur (14) étant branché entre la deuxième électrode (E2) du condensateur de mesure et le circuit comparateur (16).

**8.** Circuit de mesure selon la revendication 7, **caractérisé en ce que** la connexion de sortie de l'amplificateur séparateur (14) est branchée par un filtre passe-bas (15) à la connexion d'entrée du circuit comparateur (16).

**9.** Circuit de mesure selon la revendication 8, **caractérisé en ce que** la constante de temps RC de l'au moins un filtre passe-bas (15) est inférieure d'au moins un ordre de grandeur à la constante de temps RC des composants ($C_x$, $R_1$) définissant la fréquence de l'oscillateur.

**10.** Dispositif de mesure comprenant un circuit de mesure selon l'une quelconque des revendications précédentes, **caractérisé en ce que** le dispositif de mesure est adapté pour mesurer une propriété d'un fluide présent dans une cuve ou un canal, et **en ce que** la première et la deuxième électrode de mesure sont placées de telle sorte que le champ électrique entre la première et la deuxième électrode de mesure s'étend par-dessus le contenu de la cuve ou du canal.

**11.** Procédé de mesure de la capacité d'un condensateur de mesure ($C_x$) pourvu d'une première et d'une deuxième électrode de mesure, le condensateur de mesure étant incorporé dans un oscillateur comprenant en outre une résistance de charge ($R_1$), la fréquence du signal de sortie de l'oscillateur étant une mesure de la capacité du condensateur de mesure ($C_x$), le signal prévalant à la jonction entre le condensateur de mesure ($C_x$) et la résistance de charge ($R_1$) étant délivré à une entrée d'un amplificateur séparateur (2), **caractérisé en ce que** l'amplificateur séparateur (2) est pourvu d'un filtre passe-bas comprenant un élément RC ($C_1$, $R_4$) et **en ce que** la valeur de résistance de la résistance ($R_4$) de l'élément filtrant RC est inférieure d'au moins un ordre de grandeur à la valeur de résistance de la résistance de charge ($R_1$).

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9624823 A
- JP 2011112595 A
- GB 2279756 A